(19) Europäisches Patentamt
European Patent Office
Office européen des brevets

(11) **EP 3 404 784 B1**

(12) **EUROPEAN PATENT SPECIFICATION**

(45) Date of publication and mention
of the grant of the patent:
**23.12.2020   Bulletin 2020/52**

(51) Int Cl.:
***H02B 1/30*** *(2006.01)*      *H02B 3/00* *(2006.01)*
***H02G 3/22*** *(2006.01)*

(21) Application number: **16885006.3**

(22) Date of filing: **19.10.2016**

(86) International application number:
**PCT/JP2016/080905**

(87) International publication number:
**WO 2017/122403 (20.07.2017 Gazette 2017/29)**

(54) **SWITCHGEAR**

SCHALTANLAGE

APPAREILLAGE DE COMMUTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2016   JP 2016006106**

(43) Date of publication of application:
**21.11.2018   Bulletin 2018/47**

(73) Proprietor: **Mitsubishi Electric Corporation
Chiyoda-ku
Tokyo 100-8310 (JP)**

(72) Inventors:
• **YAMAJI Yuichi**
  **Tokyo 100-8310 (JP)**
• **KURODA Takashi**
  **Tokyo 100-8310 (JP)**
• **EBATO Teruaki**
  **Tokyo 100-8310 (JP)**
• **KUROAKI Shintaro**
  **Tokyo 102-0073 (JP)**
• **FUJI Kenichi**
  **Tokyo 102-0073 (JP)**

(74) Representative: **Mewburn Ellis LLP
Aurora Building
Counterslip
Bristol BS1 6BX (GB)**

(56) References cited:
JP-A- H0 515 014          JP-A- 2002 252 906
JP-A- 2011 167 022        JP-A- 2013 258 838
JP-U- S 599 703           JP-U- H0 222 015
JP-U- H0 345 007          JP-U- S5 860 985
US-A- 5 245 131

**Description**

Technical Field

The present invention relates to a metal-enclosed switchgear, and in particular, relates to a switchgear housing structure such that a reduction in time needed for installation work is achieved.

Background Art

A switchgear is a main instrument of power receiving and distributing equipment that receives power from a power system such as a power distribution line and distributes power to a load instrument or the like, and is an enclosed metal plate including a circuit breaker, a relay, and the like. The switchgear is such that a portion forming an electrical path is configured of a conductor, and the conductor functions as a bus and a branch conductor. Also, the conductors are supported by insulator or the like in order to secure electric isolation from a frame that configures a housing of the switchgear.

Furthermore, the conductors are connected to a main circuit unit configured of switching devices such as a disconnector and a vacuum circuit breaker, instrument transformers that measure current and voltage, and the like. A metal-enclosed box is grounded, and a display operating unit for carrying out a display of current and voltage measurement results and a switch control is provided together with the main circuit unit in the metal-enclosed box.

When installing the switchgear in an electricity chamber or the like, an external cable to which the load instrument is connected and which is provided in a cable pit needs to be connected to the main circuit unit of the switchgear. As one method of connecting the external cable and the switchgear, there is a method whereby the external cable is taken into an interior of the switchgear and connected in a state wherein the external cable stands erect from a floor surface. However, a normal switchgear housing structure is such that it is difficult to draw the external cable into the interior of the switchgear in a state wherein the external cable stands erect from the cable pit.

A switchgear such that when moving a housing in a horizontal direction along a floor surface for installation, a width direction frame that may interfere with an external cable is removed from a normal position, and temporarily fixed with a bolt to a frame fixing portion that does not affect a drawing in of the cable, is proposed in Patent Document 1 as a housing structure for drawing in an existing external cable.

Citation List

Patent Literature

Patent Document 1: JP-A-2011-167022
JP S59 9703 U discloses a switchgear provided with a box body for housing an electric device such as a circuit breaker for cutting off electric power supply.
JP 2013 258838 A discloses a switch gear which enables easy installation and removal while reducing the workload and the work costs.
JP 2002 252906 A discloses a fitting structure for a ground bus of a lined board type distribution board.

Summary of Invention

Technical Problem

The housing structure shown in Patent Document 1 is such that an aperture portion is formed by removing a frame, a cover, and the like, as preparation for drawing in the external cable, but there are a large number of parts to remove. Specifically, a back cover and a width direction frame are removed, and furthermore, the removed width direction frame needs to be temporarily fixed in a position such that the width direction frame does not interfere with a power cable. Also, after work of drawing in the external cable is completed on a back side of the switchgear, work of drawing in a control cable and work of attaching a ground bus need to be carried out on a front side. In this way, the existing switchgear has a problem in that time is needed for installation work, including preparation for drawing the external cable into the interior of the housing and restoration work for returning to the original state.

The invention, having been contrived in order to resolve the heretofore described kind of problem, has an object of providing a switchgear with a housing structure such that work of drawing in an external cable is easy, and a reduction in time needed for installation work can be achieved.

Solution to Problem

A switchgear according to the invention is disclosed in claim 1 as appended hereto.

Advantageous Effects of Invention

The switchgear according to the invention has an aperture portion opened from a floor plate of a housing to a side wall, and a cover member covering an aperture portion can easily be attached and detached, because of which an external cable can easily be drawn into an interior of the housing simply by the housing from which the cover member has been removed being moved horizontally, and after the external cable is connected to a terminal disposed in the interior of the housing, installation work is completed simply by the cover member being attached, because of which time needed for the installation work, including pre-installation preparation and recovery work, can be reduced.

Other objects, characteristics, and aspects of the invention will become further apparent from the following detailed description, referring to the drawings.

Brief Description of Drawings

[Fig. 1] Fig. 1 is a side sectional view showing a configuration of a switchgear according to a first embodiment of the invention.

[Fig. 2] Fig. 2 is a side view, a front view, and a bottom view showing a front face lower portion of the switchgear according to the first embodiment of the invention.

[Fig. 3] Fig. 3 is a side view, a front view, and a bottom view showing a front panel of the switchgear according to the first embodiment of the invention.

[Fig. 4] Fig. 4 is a side view, a front view, and a bottom view showing a frame of the switchgear according to the first embodiment of the invention.

[Fig. 5] Fig. 5 is a perspective view and a three-view drawing showing a ground bus of the switchgear according to the first embodiment of the invention.

[Fig. 6] Fig. 6 is a diagram illustrating a procedure of drawing an external cable into the switchgear according to the first embodiment of the invention.

[Fig. 7] Fig. 7 is a diagram illustrating the procedure of drawing the external cable into the switchgear according to the first embodiment of the invention.

[Fig. 8] Fig. 8 is a top view showing a front side lower portion when three of the switchgear according to the first embodiment of the invention are disposed in a row. The following reference arrangements do not belong to the invention as claimed.

[Fig. 9] Fig. 9 is a drawing showing an external cable connection position in an existing switchgear in a first reference arrangement.

[Fig. 10] Fig. 10 is a diagram showing an example of a distribution of positions of connection with the external cable when updating from the existing switchgear to a new switchgear in the first reference arrangement.

[Fig. 11] Fig. 11 is a diagram showing another example of a distribution of positions of connection with the external cable when updating from the existing switchgear to a new switchgear in the first reference arrangement.

[Fig. 12] Fig. 12 is a diagram showing an array when six each of existing switchgears and new switchgears are disposed in a row in the first reference arrangement.

[Fig. 13] Fig. 13 is a side sectional view showing a configuration of a switchgear according to a second reference arrangement.

[Fig. 14] Fig. 14 is a front view of the switchgear according to the second reference arrangement seen from a back face side.

[Fig. 15] Fig. 15 is a bottom view of the back face side of the switchgear according to the second reference arrangement.

[Fig. 16] Fig. 16 is a side view, a front view, and a bottom view showing an L-form cover of the switchgear according to the second reference arrangement.

[Fig. 17] Fig. 17 is a diagram illustrating a procedure of drawing the external cable into the switchgear according to the second reference arrangement.

[Fig. 18] Fig. 18 is a bottom view showing an example of another L-form cover of the switchgear according to the second reference arrangement.

[Fig. 19] Fig. 19 is a bottom view of a back face side of a switchgear according to a third reference arrangement.

[Fig. 20] Fig. 20 is a diagram illustrating a procedure of drawing the external cable into the switchgear according to the third reference arrangement.

[Fig. 21] Fig. 21 is a front view of a switchgear according to a fourth reference arrangement seen from a back face side.

[Fig. 22] Fig. 22 is a bottom view of the back face side of the switchgear according to the fourth reference arrangement .

[Fig. 23] Fig. 23 is a side view, a front view, and a bottom view showing a metal frame configuring an L-form cover of the switchgear according to the fourth reference arrangement .

[Fig. 24] Fig. 24 is a side view and a front view showing a metal plate configuring the L-form cover of the switchgear according to the fourth reference arrangement.

[Fig. 25] Fig. 25 is a sectional view showing the L-form cover of the switchgear according to the fourth reference arrangement.

[Fig. 26] Fig. 26 is a diagram showing a state when inspecting the switchgear according to the fourth reference arrangement.

Description of Embodiments

First Embodiment

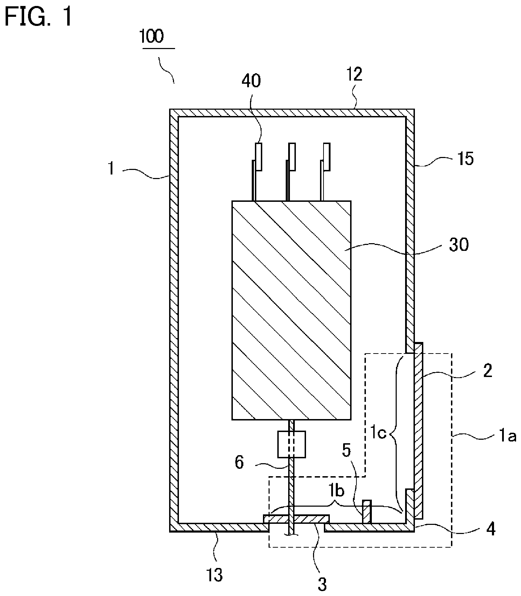

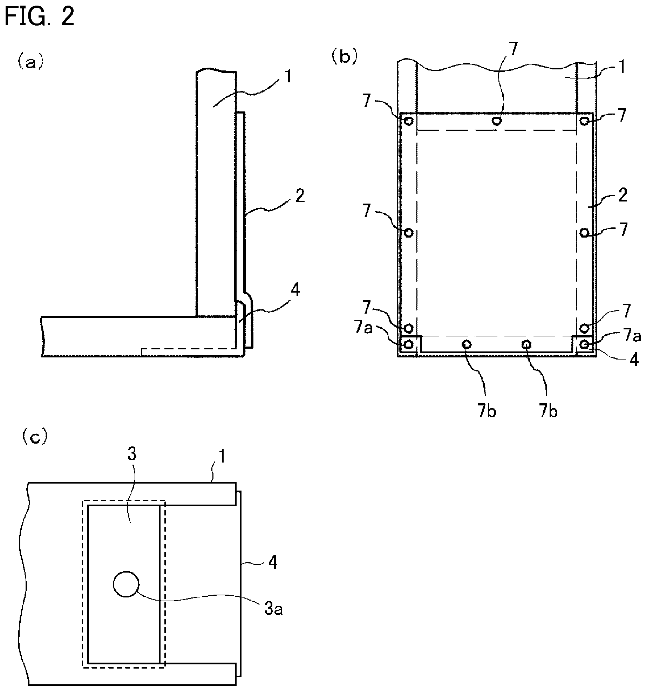

Hereafter, based on the drawings, a switchgear according to a first embodiment of the invention will be described. Fig. 1 is a side sectional view schematically showing a configuration of the switchgear according to the first embodiment, and in the drawing, a right side is a front face of the switchgear, and a left side is a back face. Also, Fig. 2 shows a front face lower portion, which is a main portion of the switchgear according to the first embodiment, wherein (a) is a side view, (b) is a front view, and (c) is a bottom view. The same reference signs are allotted to identical or corresponding portions in the drawings.

A housing 1 of a switchgear 100 according to the first embodiment is configured to include a top plate 12 and a floor plate 13 disposed opposing, and four side walls 15 perpendicular to the top plate 12 and the floor plate 13. The top plate 12, the floor plate 13, and the side walls 15 are each supported by a frame (omitted from the drawings). A switching device 30, a bus conductor 40, an operating device (omitted from the drawings), a terminal (omitted from the drawings) connected to an external cable 6, and the like, are provided in an interior of the housing 1.

The housing 1 has an aperture portion 1a of an L-shaped cross-section indicated by a region enclosed by broken lines in Fig. 1. The aperture portion 1a is such that a floor face aperture portion 1b provided in the floor plate 13 and a front face aperture portion 1c, which is a side face aperture portion provided in a lower portion of the side wall 15 forming a front face of the housing 1, are integrated. Also, a cover member that covers the aperture portion 1a is detachably attached with a multiple of bolts 7 and 7a to the housing 1. In the first embodiment, the cover member is configured of a front panel 2, a cover 3, and an L-form frame 4 (hereafter abbreviated as the frame 4).

As shown in Fig. 1, the aperture portion 1a is provided from the lower portion of the front face side wall 15 to one portion of the floor plate 13 so as to communicate with an inside and an outside of the housing 1. When carrying out a drawing of the external cable 6 into the switchgear 100, the cover member is removed from the housing 1 to form the aperture portion 1a, and the external cable 6 is drawn into the interior of the housing 1 through the aperture portion 1a. Also, in a state in which the cover member is attached, one portion of the floor face aperture portion 1b is opened as a portion through which the external cable 6 is drawn.

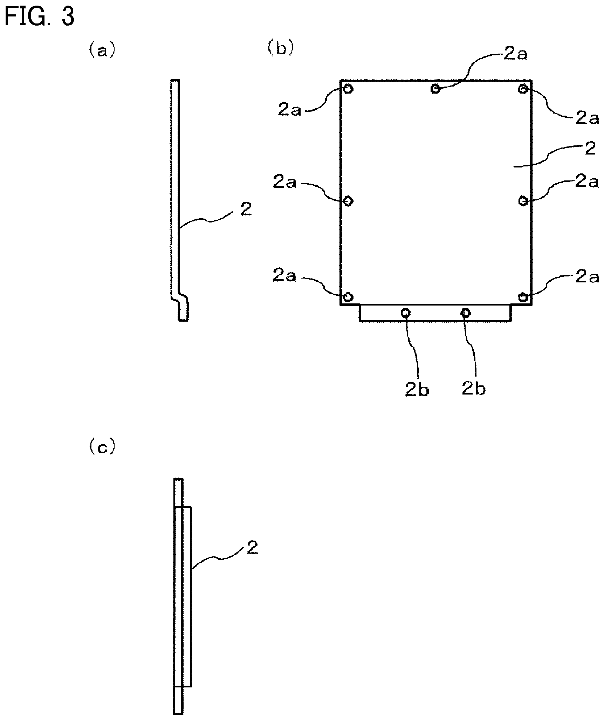

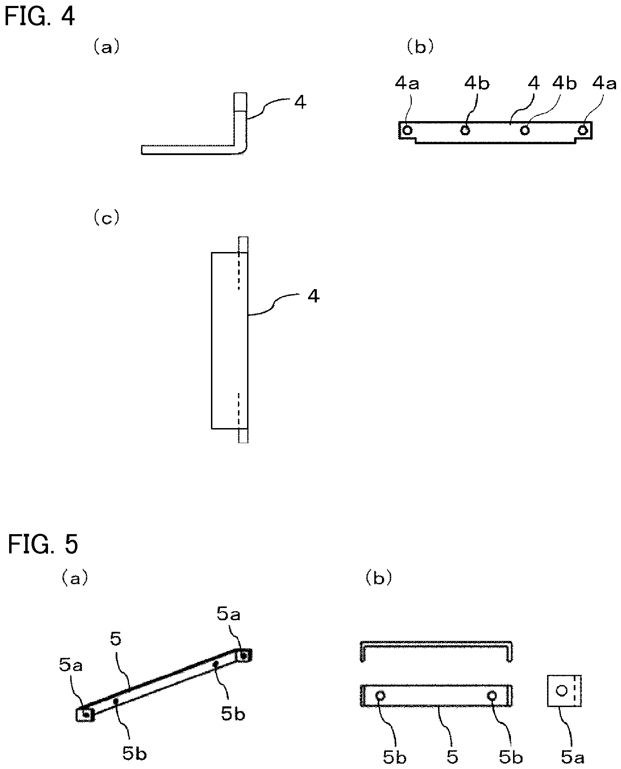

A structure of the front panel 2, the cover 3, and the frame 4, which are the cover member covering the aperture portion 1a, will be described in detail using Fig. 2 to Fig. 5. Fig. 3(a) to Fig. 3(c) are a side view, a front view, and a bottom view showing the front panel. Also, Fig. 4 (a) to Fig. 4(c) are a side view, a front view, and a bottom view showing the frame. Also, Fig. 5(a) and Fig. 5(b) are a perspective view and a three-view drawing showing a ground bus.

The front panel 2 has a bolt hole 2a for fixing the front panel 2 to the housing 1 on three sides, excepting a floor face side, and has a bolt hole 2b for fixing the front panel 2 to the frame 4 on the floor face side (Fig. 3(b)).

The frame 4 is such that a cross-section when the housing 1 is seen from a side is formed in an L-form (Fig. 2(a), Fig. 4(a)), and has bolt holes 4a and 4b (Fig. 4(b)). The frame 4 is fixed with the bolt 7a to a lower portion of the side wall 15 on the front side of the housing 1 via the bolt hole 4a. Also, the front panel 2 is fixed with a bolt 7b to the frame 4 via the bolt hole 4b of the frame 4 and the bolt hole 2b of the front panel 2 (Fig. 2(b)).

The cover 3 has a through hole 3a acting as a cable draw-in portion through which the external cable 6 is caused to pass, and overlaps one portion of the frame 4 on the floor face side of the housing 1. Broken lines in Fig. 2 (c) indicate a portion in which the cover 3 overlaps the frame 4 or the housing 1. The cover 3 is placed on inner side faces of the frame 4 and the housing 1, and is fixed to neither the frame 4 nor the housing 1. That is, the cover 3 can move forward and backward, and left and right, with respect to the frame 4 and the housing 1.

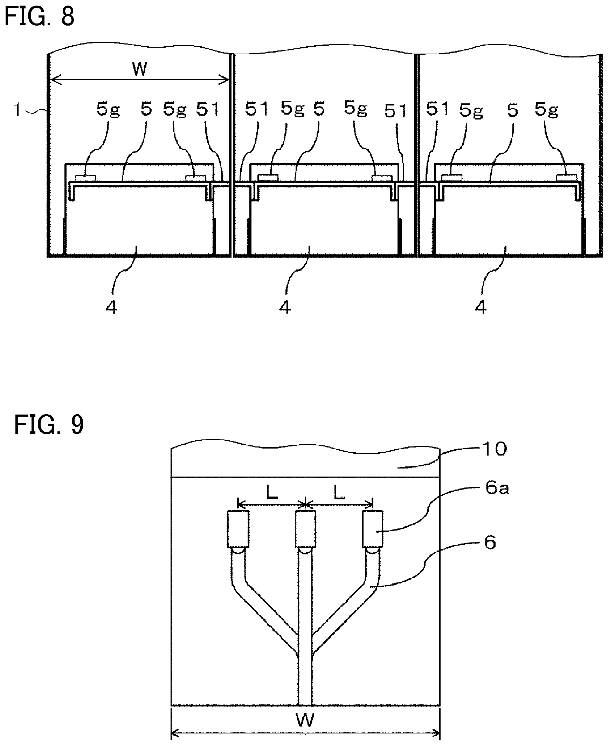

Also, a ground bus 5 is attached to the frame 4 in a place on the inner side of the housing 1 in a state wherein the frame 4 is attached to the housing 1. The ground bus 5 is formed with both ends bent, and has a bolt hole 5a in either end (Fig. 5(a)) for connecting to an inter-plate ground bus adapter 51 (refer to Fig. 8). The bolt hole 5a is used when switchgears 100 are disposed in a row, and is unneeded when not disposing in a row. "Disposing in a row" means that a multiple of switchgears are disposed side-by-side.

Also, the ground bus 5 has bolt holes 5b for connecting to an upright portion 5g of the frame 4 (refer to Fig. 8), and is fixed with bolts to the frame 4 via the bolt holes 5b (Fig. 5(b)). When removing the frame 4 from the housing 1, the ground bus 5 is removed simultaneously with the frame 4 from the housing 1.

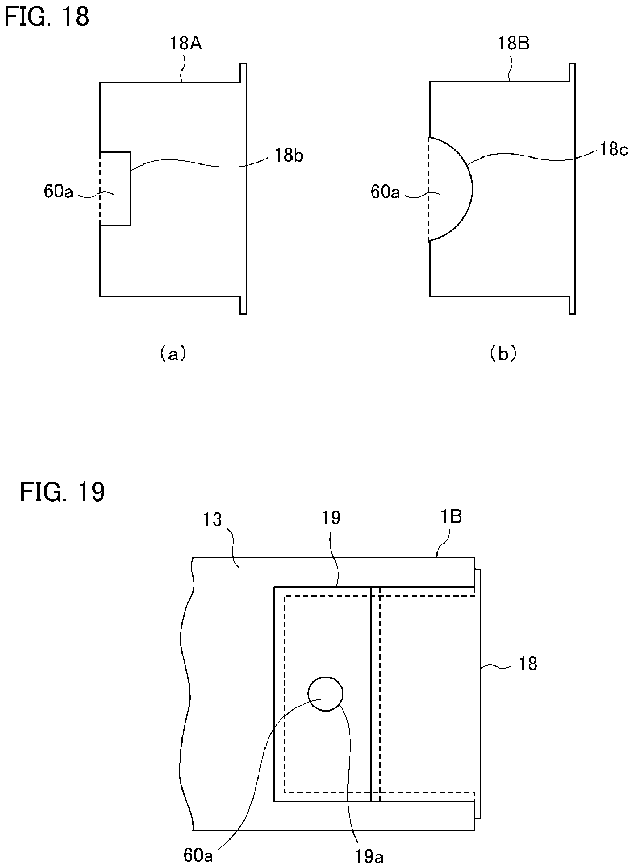

In the first embodiment, the frame 4 is formed by one plate-form member being bent, but an L-form frame may also be formed by two plate-form members being bonded by welding or the like, or fixed by screwing. Also, the through hole 3a that acts as the cable draw-in portion provided in the cover 3 may be a rectangular hole rather than a round hole. Furthermore, a rectangular or semi-circular depressed portion may be provided in an end portion of the cover 3 instead of the through hole 3a (refer to Fig. 18).

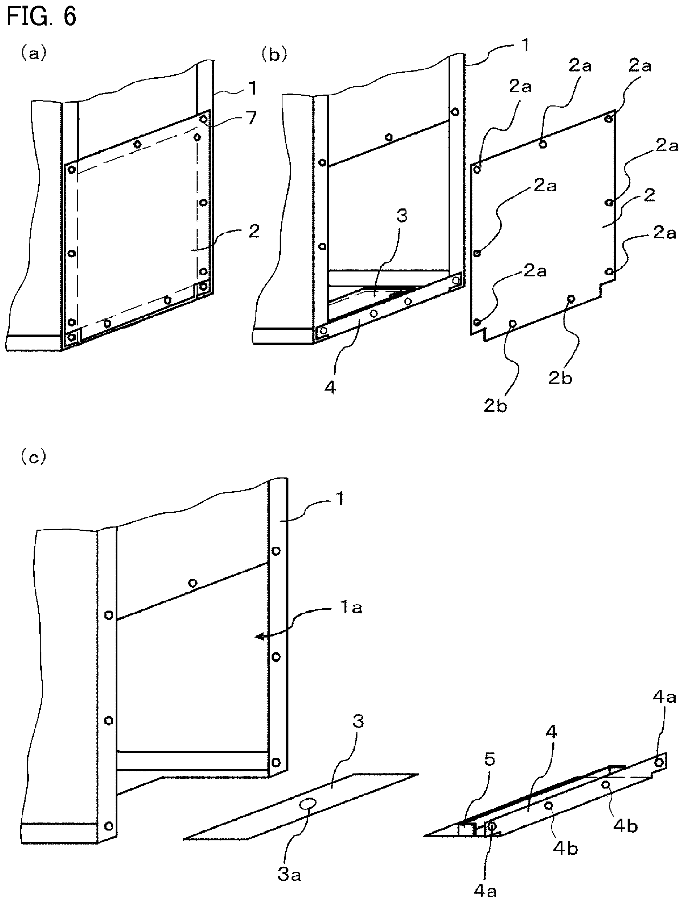

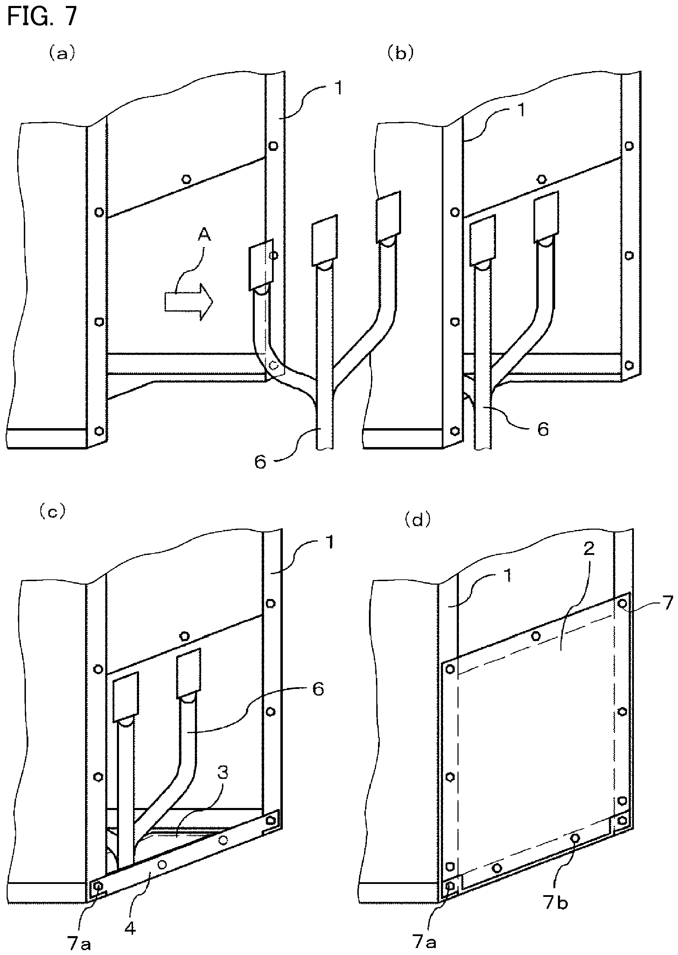

A procedure when drawing the external cable 6 into the switchgear 100 according to the first embodiment will be described using Fig. 6 and Fig. 7. Firstly, as shown in Fig. 6(a), the switchgear 100 is conveyed behind a position in which the external cable (omitted from the drawings) stands upright, and is temporarily positioned. Next, as shown in Fig. 6(b), the bolts (omitted from the drawings) are removed from the bolt holes 2a and 2b, and the front panel 2 is removed from the housing 1.

Next, as shown in Fig. 6(c), the bolt is removed from the bolt hole 4a, and the frame 4 and the ground bus 5 are removed from the housing 1. At this time, the frame 4 and the ground bus 5 can be removed simultaneously. In a state wherein the front panel 2 and the frame 4 are fixed with the bolt 7b, the front panel 2 and the frame 4 can also be removed simultaneously from the housing 1. Continuing, the cover 3 is removed from the housing 1, whereby the aperture portion 1a is formed.

Next, as shown in Fig. 7(a), the switchgear 100 is moved to a front side (a direction indicated by an arrow A in the drawing). As a result of this, the external cable 6 is drawn into the interior of the switchgear 100, as shown in Fig. 7 (b). Subsequently, the cover 3 that has the through hole 3a for passing the drawn-in external cable 6 through is installed on the inner side of the housing 1.

Next, as shown in Fig. 7(c), the frame 4 to which the ground bus 5 is attached is attached to the housing 1 with the bolt 7a. Lastly, as shown in Fig. 7(d), the front panel 2 is attached to the housing 1 and the frame 4 with the bolts 7 and 7b. In the above description, the front panel 2, the frame 4, and the like, are removed after the switchgear 100 is temporarily positioned, but the temporary positioning of the switchgear 100 may also be carried out in a state wherein the front panel 2, the cover 3, the frame 4, and the ground bus 5 are removed in advance.

Fig. 8 is a top view showing a front side lower portion when three of the switchgear 100 according to the first embodiment are disposed in a row. The ground bus 5 is such that a dimension in a width direction of the housing 1 (a direction indicated by W in the drawing) is shorter than a dimension of the frame 4 in the same direction, and the ground bus 5 is fixed to the frame 4 by being bolted to the upright portion 5g of the frame 4. Connection of the ground bus 5 when the switchgears 100 are disposed in a row is carried out by an end of the ground bus 5 on the ground bus adaptor 51 side in each of the switchgears 100 being fixed to the ground bus adaptor 51.

As previously described, the ground bus 5 has the bolt hole 5a in both bent ends, and in the same way, the ground bus adaptor 51 also has a bolt hole (omitted from the drawing) in both bent ends. After the three switchgears 100 are disposed in a row, the ground buses 5 of the switchgears 100 are electrically connected to each other by the bolt hole 5a of the ground bus 5 and the bolt hole of the ground bus adapter 51 being bolted together.

When removing the frame 4 from the housing 1, the bolt fixing the ground bus 5 and the ground bus adapter 51 is loosened and removed, whereby the frame 4 and the ground bus 5 can be simultaneously removed from the housing 1. Also, when attaching the frame 4 to the housing 1, the ground bus 5 attached to the frame 4 and the ground bus adapter 51 are bolted together, whereby the frame 4 and the ground bus 5 can be simultaneously attached to the housing 1.

When power receiving and distributing facility is of a small scale, in the region of three switchgears 100 may be disposed in a row, and housed in a small electricity chamber together with an electrical instrument such as a transformer. In such a case, it is necessary to consider conveying restrictions caused by dimensions of a passage to the electricity chamber and an electricity chamber entrance, and installation space in the electricity chamber, and there is a demand for a small switchgear that can be individually conveyed. By using the ground bus adapter 51 shown in Fig. 8, the switchgear 100 can be individually conveyed into the electricity chamber, and a multiple of the switchgear 100 disposed in a row after being conveyed.

As heretofore described, the switchgear 100 according to the first embodiment has the aperture portion 1a opened from the floor plate 13 of the housing 1 to the front face side wall 15, and the cover member covering the aperture portion 1a can easily be attached and detached, because of which the external cable 6 can easily be drawn into the interior of the housing 1 simply by the housing 1 from which the cover member has been removed being moved horizontally, and after the external cable 6 is connected to the terminal disposed in the interior of the housing 1, the installation work is completed simply by the cover member being attached. Also, by the frame 4 on the front face side being removed, the ground bus 5 can also be removed simultaneously, because of which, when drawing the external cable 6 into the switchgear 100, the drawing-in work can be carried out from the front face side of the housing 1.

An existing switchgear is such that after work of drawing in an external cable is completed on a back face side, work of drawing in a control cable and work of attaching a ground bus are further carried out on a front face side. As opposed to this, according to the switchgear 100 according to the first embodiment, the work of drawing in the external cable 6, the work of drawing in a control cable, and the work of attaching the ground bus 5 can all be carried out on the front face side. Also, as there is no need to secure a workspace on the back face side, the installation space of the switchgear 100 can be reduced.

Furthermore, as the housing 1 is moved horizontally along the floor surface, and the external cable 6 is drawn into the housing 1 through the aperture portion 1a, the external cable 6 does not come into contact with the housing 1. Because of this, special work of drawing in the external cable 6, work of adjusting the length of the external cable 6, work of lowering the external cable 6 into the cable pit, and the like, are unnecessary. For the above reasons, according to the first embodiment, the switchgear 100 such that the new or existing external cable 6 can easily be drawn in from the front face side of the housing 1, the work of attaching the ground bus 5 can be simplified, and the time needed for the installation work can be considerably reduced, is obtained.

First reference arrangement, not belonging to the invention as claimed.

A switchgear according to a first reference arrangement, which is not an embodiment of the present invention, is used as a new switchgear when updating existing switchgears disposed in a row of three to new switchgears. The first reference arrangement achieves a reduction in time needed for installation work when updating from existing switchgears to new switchgears in a case wherein a multiple of switchgears are disposed in rows in units of three. Except that the position of the terminal connected to the external cable 6 is adjusted, a configuration of the switchgear according to the first reference arrangement is the same as that in the first embodiment, because of which a description will be omitted here.

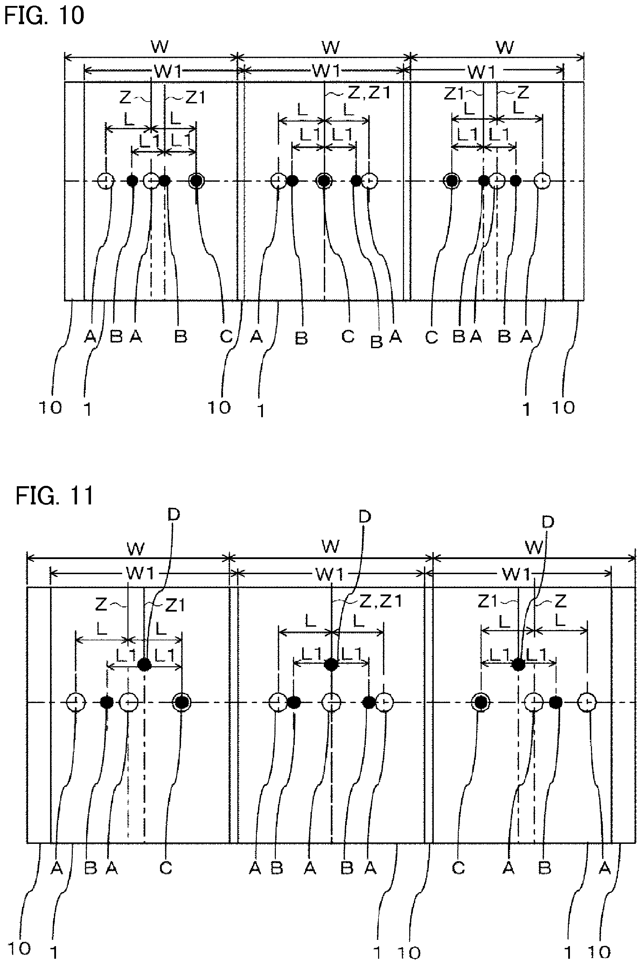

Fig. 9 is a drawing wherein a position of connection with an external cable in an existing housing of an existing switchgear is seen from a back face side. The external cable 6 drawn into an existing housing 10 has three branch bodies 6a, which are connected one to each of three phases of existing terminals (omitted from the drawing) disposed in an interior of the existing housing 10. Also, Fig. 10 shows an example of a distribution of positions of connection with the external cable when updating from the existing switchgear to a new switchgear.

In Fig. 9 and Fig. 10, W indicates a dimension in a width direction of the existing housing 10 of the existing switchgear, and W1 (W1 < W) indicates a dimension in a width direction of the housing 1 of the new switchgear. Also, L indicates an interval in the width direction between connection positions of the three phases of existing terminals disposed in the interior of the existing housing 10 and the external cable 6, and L1 (L1 < L) indicates an interval in the width direction (hereafter called a phase pitch) between connection positions of three phases of terminals disposed in the interior of the housing 1 and the external cable 6.

Also, in Fig. 10, a white circle A indicates a connection position of an existing terminal of the existing switchgear and the external cable 6, a black circle B indicates a connection position of a terminal of the new switchgear and the external cable 6, and a double circle C including a white circle and a black circle indicates a position of connection with the external cable 6 coinciding in the existing switchgear and the new switchgear. Also, dashed-dotted lines indicated by Z and Z1 indicate central lines of the existing switchgear and the new switchgear respectively.

The phase pitch L1 of the three phases of terminals disposed in the interior of the housing 1 is obtained using the following Expression (1) from the dimension W in the width direction of the existing housing 10 of the existing switchgear, the phase pitch L of the three phases of terminals disposed in the interior of the existing housing 10, and the dimension W1 in the width direction of the housing 1 of the new switchgear.

[Math. 1]

$$L1 = L - (W - W1) \tag{1}$$

New switchgears wherein the terminals are disposed so as to satisfy Expression (1) are prepared and, with three switchgears as one set, installed with the central line Z1 of the central new switchgear aligned with the central line Z of the central existing switchgear, as shown in Fig. 10. By so doing, the position of connection with the external cable 6 coincides in the new switchgear and the existing switchgear in one phase of each of the three switchgears, that is, in the position indicated by C in the drawing.

Also, an example of a connection position distribution different from that of Fig. 10 is shown in Fig. 11. In Fig. 10, the positions of connection with the external cable 6 in the new switchgear are disposed in a horizontal direction, but the positions of connection with the external cable 6 may also be disposed so as to form a triangle, with the position of connection with the central external cable 6 in each of the new switchgears (indicated by a black circle D in the drawing) disposed on an upper side in the drawing. In this case, the position of connection with the external cable 6 coincides in the new switchgear and the existing switchgear in one phase of each of the two switchgears at either end among the three switchgears.

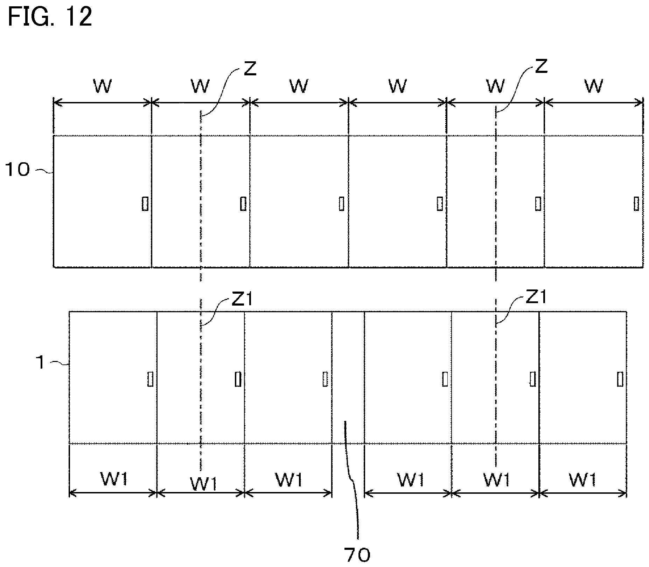

Fig. 12 shows an array when six each of existing switchgears and new switchgears are disposed in a row. With three switchgears as one set in this case too, the switchgears are arrayed with the central line Z1 of the central new switchgear coinciding with the central line Z of the central existing switchgear. An adapter 70 is disposed in a gap formed between sets of switchgears. Even when the adapter 70 is disposed in this way, an overall width direction dimension of the six new switchgears disposed in a row is smaller than an overall width direction dimension of the existing switchgears.

A timing for updating a switchgear is generally from 20 years to 30 years after installation, although a longer period may elapse. Because of this, a new switchgear is normally considerably smaller in comparison with an existing switchgear. However, when there are a large number of switchgears, and the external cable 6 is reused, it may happen, taking on-site workability into consideration, that external dimensions of the new switchgear are caused to coincide with external directions of the existing switchgear. Also, there is a case in which the external cable 6 cannot be reused because a new switchgear smaller than the existing switchgear is used.

According to the first reference arrangement, a new switchgear that satisfies Expression (1) is used, whereby a connection position of the external cable 6 with respect to the width direction dimension W1 of the housing 1 of the new switchgear is appropriately adjusted, because of which there is no need to cause the external dimensions of the new switchgear to coincide with the external dimensions of the existing switchgear, and the existing external cable 6 can be reused. Because of this, the new switchgear can be reduced in size, and a saving of space is achieved.

Because of this, other equipment can be provided in the freed-up space, and space in the electricity chamber can be effectively utilized. Also, as each switchgear can be conveyed individually, a place that forms a conveying restriction, such as a passage to the electricity chamber or a door, is easily passed through. Furthermore, the switchgear can be temporarily positioned in freed-up space in the electricity chamber, because of which working efficiency increases.

Also, as one portion of places connected to the external cable 6 is disposed in the same position in the existing switchgear and the new switchgear, adjusting the dimensions of the external cable 6 is easy, and a reduction in time needed for installation work can be achieved.

Second reference arrangement, not belonging to the invention as claimed.

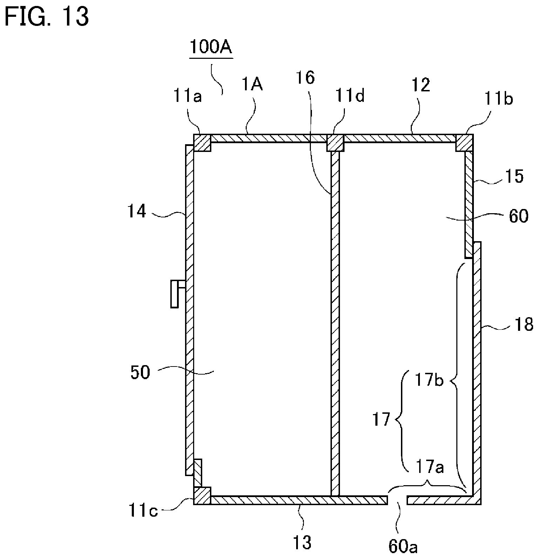

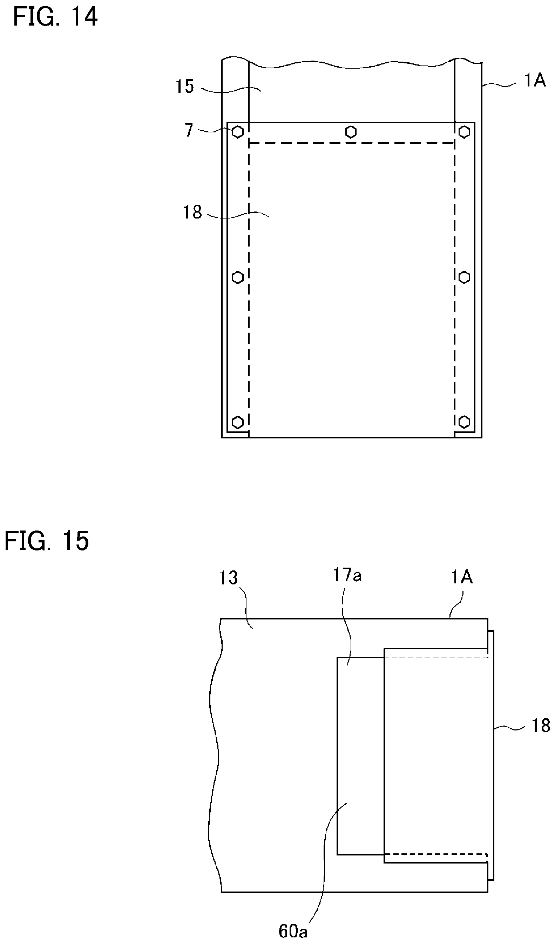

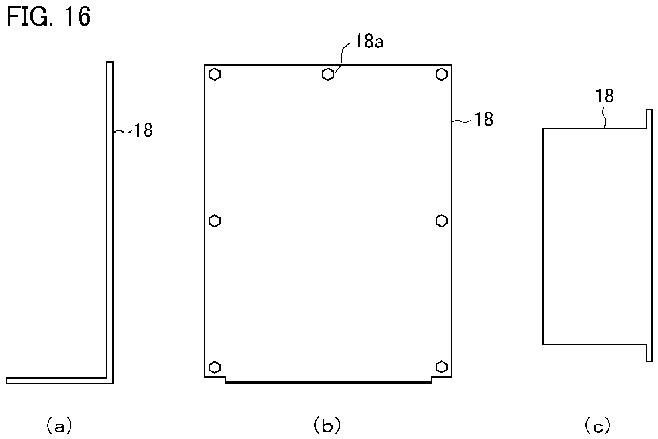

Fig. 13 is a side sectional view schematically showing a configuration of a switchgear according to a second reference arrangement, which is not an embodiment of the present invention, and in the drawing, a left side is a front face of the switchgear, and a right side is a back face. Also, Fig. 14 and Fig. 15 are a front view of the switchgear according to the second reference arrangement seen from the back face and a bottom view of the back face side. Also, Fig. 16(a) to Fig. 16(c) are a side view, a front view, and a bottom view showing an L-form cover of the switchgear according to the second reference arrangement.

As shown in Fig. 13, a switchgear 100A according to the second reference arrangement includes a metal-enclosed housing 1A. The housing 1A is such that metal frames 11a, 11b, 11c, and 11d (collectively called a frame 11) are used on each side, and plate members such as the top plate 12, the floor plate 13, the side walls 15, and a partitioning wall 16 are supported by the frame 11.

An interior of the housing 1A is compartmentalized by the partitioning wall 16. A circuit breaker chamber 50 in which a vacuum circuit breaker (omitted from the drawings) is disposed is provided on the front face side, and a cable chamber 60 in which a terminal (omitted from the drawings) connected to the external cable 6 is disposed is provided on the back face side. An access door 14 is provided in the circuit breaker chamber 50. A configuration of the switchgear 100A according to the second reference arrangement not being limited to the example shown in Fig. 13, the number and disposition of the frame 11 and partitioning wall 16 can be changed as appropriate .

The housing 1A has an aperture portion 17 of an L-shaped cross-section, wherein a floor face aperture portion 17a provided in the floor plate 13 enclosing the cable chamber 60 and a back face aperture portion 17b provided in the back face side wall 15 enclosing the cable chamber 60 are integrated without passing through the frame 11. That is, the housing 1A is of a structure such that there is no width direction frame in a back side lower portion.

Also, as shown in Fig. 14, an L-form cover 18 of an L-shaped cross-section covering the aperture portion 17 is detachably attached to the back face of the housing 1A with a multiple of bolts 7. In a state wherein the L-form cover 18 is attached, one portion of the floor face aperture portion 17a is opened as a cable draw-in portion 60a, as shown in Fig. 15. The L-form cover 18 is processed into an L-form as seen from a side, and performs a role of a frame (Fig. 16(a)). Also, the L-form cover 18 has a multiple of bolt holes 18a along an outer periphery thereof (Fig. 16(b)).

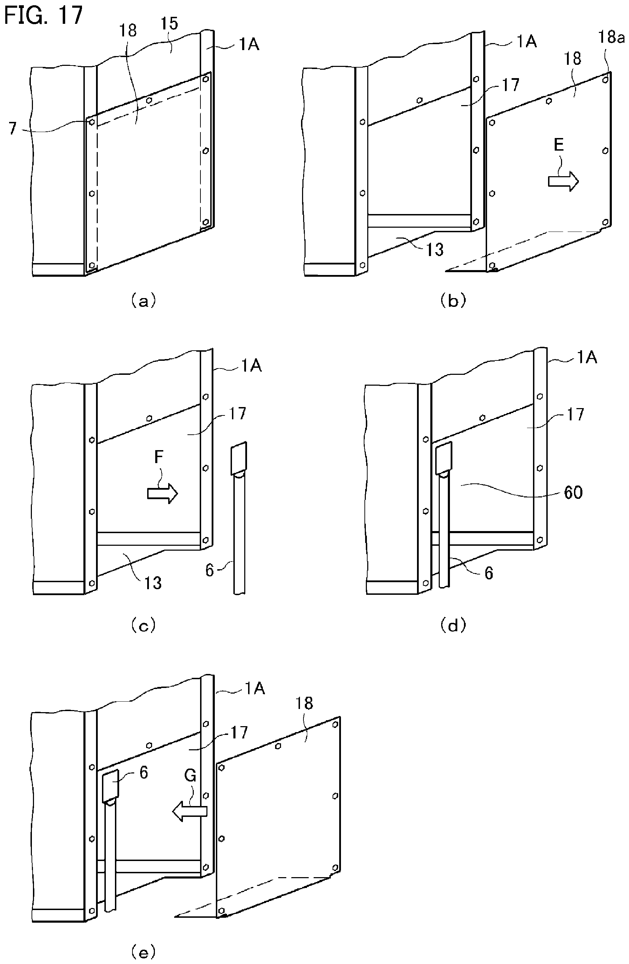

A procedure when drawing the existing external cable 6 into the switchgear 100A according to the second reference arrangement will be described using Fig. 17. In the drawing, an arrow E and an arrow G indicate a direction of movement of the L-form cover 18, and an arrow F indicates a direction of movement of the housing 1A. The external cable 6 stands upright from a place in which the switchgear 100A is to be installed, for example, a cable pit (omitted from the drawing) installed in a floor of the electricity chamber.

Firstly, as shown in Fig. 17(a), the switchgear 100A having the housing 1A is prepared in a vicinity of an installation place. Continuing, the bolt 7 fixing the L-form cover 18 to the housing 1A is removed, and the L-form cover 18 is removed from the housing 1A, as shown in Fig. 17 (b). This completes the preparation for drawing the external cable 6 into the switchgear 100A. Continuing, the housing 1A is moved horizontally from the front face side toward the back face side, as shown in Fig. 17(c), and the existing external cable 6 is drawn into the cable chamber 60 through the aperture portion 17, as shown in Fig. 17(d). At this time, the aperture portion 17 is opened from the floor plate 13 of the cable chamber 60 to the back face side wall 15, and there is no width direction frame in the back side lower portion, because of which the external cable 6 can be drawn in easily.

After the external cable 6 is connected to the terminal, the L-form cover 18 is attached to the housing 1A and fixed with the bolt 7, as shown in Fig. 17(e), whereby the installation work is completed. When removing the external cable 6, a procedure is the reverse of that when drawing in the external cable 6.

The L-form cover 18 in the second reference arrangement, not being limited to the form shown in Fig. 16, can be modified in various ways. Fig. 18 is a bottom view showing a modified example of an L-form cover. An L-form cover 18A shown in Fig. 18(a) has a rectangular depressed portion 18b as the cable draw-in portion 60a. Also, an L-form cover 18B shown in Fig. 18(b) has a semi-circular depressed portion 18c as the cable draw-in portion 60a. By adopting this kind of structure, the cable draw-in portion 60a can be of the minimum necessary size. The depressed portions 18b and 18c may be processed in accordance with the size of the external cable 6.

The switchgear 100A according to the second reference arrangement has the aperture portion 17 that does not pass through the frame from the floor plate 13 enclosing the cable chamber 60 to the back face side wall 15, and the external cable 6 can easily be drawn into the interior of the cable chamber 60 simply by removing the L-form cover member 18 covering the aperture portion 17. Also, after the external cable 6 is connected to the terminal in the cable chamber 60, the installation work is completed simply by the L-form cover member 18 being attached.

Consequently, according to the second reference arrangement, the switchgear 100A such that a reduction in time needed for installation work, including pre-installation preparation and recovery work, is obtained. The housing structure of the switchgear 100A according to the second reference arrangement is such that as the aperture portion 17 is large, advantages are achieved in that the external cable is easily drawn in and working time is reduced, not only when drawing in the existing external cable 6, but also when newly installing a switchgear.

Third reference arrangement, not belonging to the invention as claimed.

Fig. 19 is a bottom view showing a switchgear according to a third reference arrangement, which is not an embodiment of the present invention. The second reference arrangement is such that when attempting to increase the size of the aperture portion 17, in particular the floor face aperture portion 17a, the L-form cover 18 increases in size, becoming difficult to handle. In the third reference arrangement, therefore, one portion of the floor face aperture portion 17a is covered with a floor face cover 19 in order to obtain the aperture portion 17 that is larger than in the second reference arrangement. As an overall configuration of the switchgear according to the third reference arrangement is practically the same as that of the switchgear 100A according to the second reference arrangement, the configuration will be described utilizing Fig. 13.

As shown in Fig. 19, the floor face cover 19 has a through hole 19a acting as the cable draw-in portion 60a, and is fixed with a screw (omitted from the drawing) to a lower portion of a housing 1B. The L-form cover 18 and the floor face cover 19 partially overlap so that there is no gap, but are not connected. In order that the through hole 19a of the floor face cover 19 is of the minimum necessary size for drawing in the external cable 6, the through hole 19a may be processed in accordance with the size of the external cable 6. Also, the through hole 19a may be a rectangular hole rather than a round hole. Furthermore, a rectangular or semi-circular depressed portion may be provided in an end portion of the cover 19 instead of the through hole 19a.

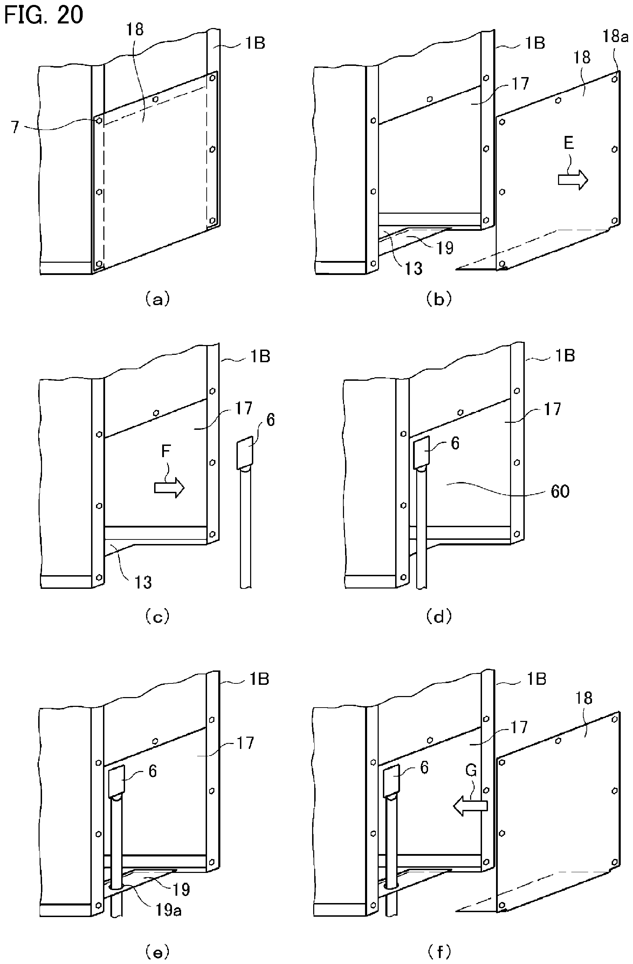

A procedure when drawing the existing external cable 6 into the switchgear according to the third reference arrangement will be described using Fig. 20. In the drawing, the arrow E and the arrow G indicate a direction of movement of the L-form cover 18, and the arrow F indicates a direction of movement of the housing 1B. The external cable 6 stands upright from a place in which the switchgear is to be installed, for example, the cable pit (omitted from the drawing) installed in the floor of the electricity chamber.

Firstly, as shown in Fig. 20(a), the switchgear having the housing 1B is prepared in a vicinity of an installation place. Continuing, the bolt 7 fixing the L-form cover 18 to the housing 1B is removed, and the L-form cover 18 is removed from the housing 1B, as shown in Fig. 20 (b). Furthermore, the screw fixing the floor face cover 19 to the housing 1B is removed, and the floor face cover 19 is removed from the housing 1B. This completes the preparation for drawing the external cable 6 into the switchgear.

Continuing, the housing 1B is moved horizontally from the front face side toward the back face side, as shown in Fig. 20(c), and the existing external cable 6 is drawn into the cable chamber 60 through the aperture portion 17, as shown in Fig. 20(d). At this time, the aperture portion 17 is opened from the floor plate 13 of the cable chamber 60 to the back face side wall 15, and there is no width direction frame in the back side lower portion, because of which the external cable 6 can be drawn in easily.

After the external cable 6 is connected to the terminal, the external cable 6 is passed through the through hole 19a of the floor face cover 19, and the floor face cover 19 is returned to the original state, as shown in Fig. 20(e). Furthermore, the L-form cover 18 is attached to the housing 1B and fixed with the bolt 7, as shown in Fig. 20(f), whereby the installation work is completed.

According to the third reference arrangement, work of removing and attaching the floor face cover 19 represents an increase in work in comparison with the second reference arrangement, but there is no increase in size of the L-form cover 18, and the aperture portion 17 can be increased in size. Also, by adopting the through hole 19a of the floor face cover 19 as the cable draw-in portion 60a, processing and fine adjustment in accordance with the position and size of the external cable 6 is easy.

Fourth reference arrangement, not belonging to the invention as claimed.

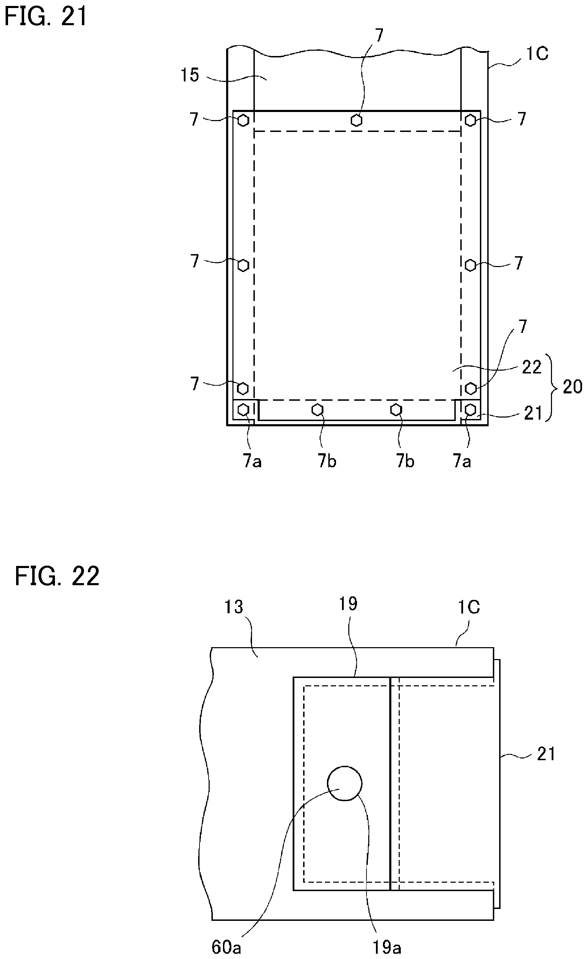

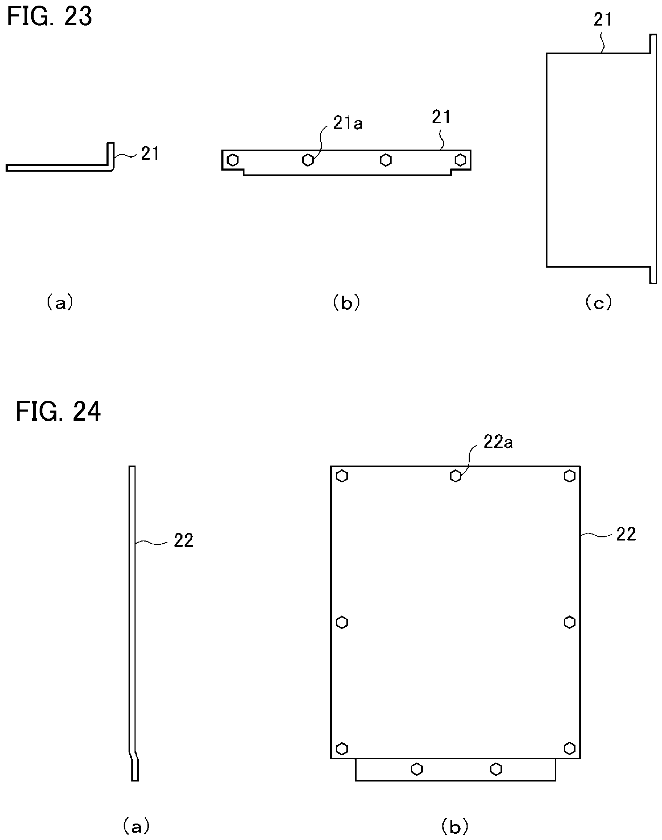

Fig. 21 is a front view of a switchgear according to a fourth reference arrangement, which is not an embodiment of the present invention, seen from a back face side, and Fig. 22 is a bottom view of the back face side of the switchgear according to the fourth reference arrangement. Also, Fig. 23(a) to Fig. 23(c) are a side view, a front view, and a bottom view showing a metal frame configuring an L-form cover of the switchgear according to the fourth reference arrangement. Furthermore, Fig. 24(a) and Fig. 24(b) are a side view and a front view showing a metal plate configuring an L-form cover of the switchgear according to the fourth reference arrangement.

In the second reference arrangement and the third reference arrangement, the L-form cover 18 is such that one metal plate is bent, but an L-form cover 20 in the fourth reference arrangement is configured to include a metal frame 21, which is a first metal member, and a metal plate 22, which is a second metal member. As the switchgear and other configurations according to the fourth reference arrangement are the same as in the third reference arrangement, a description will be omitted.

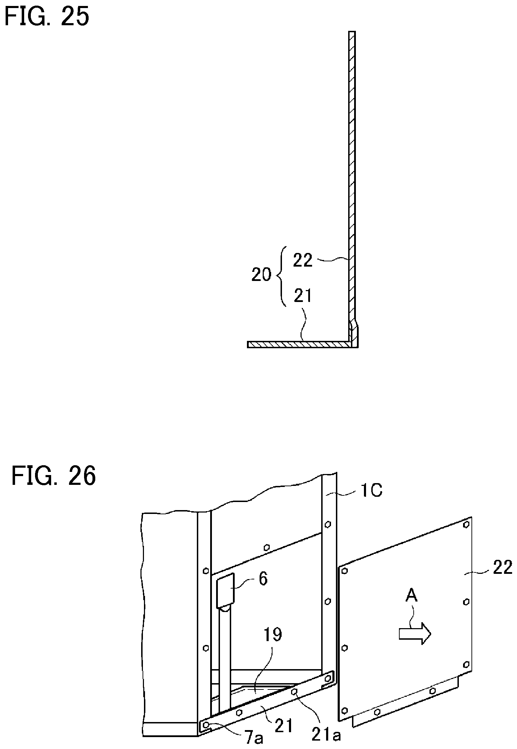

The metal frame 21 covering the floor face aperture portion 17a is a frame of an L-shaped cross-section, and has a multiple of bolt holes 21a, as shown in Fig. 23(b). Also, the metal plate 22 covering the back face aperture portion 17b has a multiple of bolt holes 22a along an outer periphery thereof, as shown in Fig. 24(b). By the metal frame 21 and the metal plate 22 being integrated, the kind of L-form cover 20 of an L-shaped cross-section shown in Fig. 25 is obtained.

When a housing 1C of the switchgear according to the fourth reference arrangement is seen from the back face side, the bolt 7 fixing the metal plate 22 to the housing 1C, the bolt 7a fixing the metal frame 21 to the housing 1C, and the bolt 7b fixing the metal plate 22 to the metal frame 21 are fastened, as shown in Fig. 21, and can be loosened from an exterior.

That is, the metal plate 22 is detachably fixed to the metal frame 21, the metal frame 21 and the metal plate 22 can be attached to and detached from the housing 1C in an integrated state, and the metal plate 22 can also be attached to and detached from the housing 1C as a single body. Although the switchgear according to the fourth reference arrangement includes the floor face cover 19, in the same way as in the third reference arrangement, the switchgear according to the fourth reference arrangement may exclude the floor face cover 19, in the same way as in the second reference arrangement.

As a procedure when drawing the existing external cable 6 into the switchgear according to the fourth reference arrangement is the same as in the third reference arrangement, with the L-form cover 18 being replaced with the L-form cover 20 in Fig. 20, a description will be omitted here.

In the case of the switchgear according to the fourth reference arrangement, however, there is no need to open the aperture portion 17 when carrying out a regular inspection or cleaning, and it is sufficient that the back face aperture portion 17b is opened. In such a case, the bolts 7 and 7b fixing the metal plate 22 to the housing 1C and the metal frame 21 are removed, and the bolt 7a fixing the metal frame 21 and the housing 1C remains fastened. By so doing, only the metal plate 22 is removed from the housing 1C, and the metal frame 21 can remain attached to the housing 1C, as shown in Fig. 26.

The embodiments of the invention can be freely combined, and each embodiment can be modified or abbreviated as appropriate, without departing from the scope of the invention, as defined by the appended claims.

**Claims**

1. A switchgear, comprising:

   a housing (1) having a top plate (12), a floor plate (13), and a side wall (15), and having an aperture portion (1a) comprising a floor face aperture portion (1b) provided in the floor plate (13) and a side face aperture portion (1c) provided in the side wall (15);
   a cover member (2, 3, 4) detachably attached to the housing (1) so as to cover the aperture portion (1a); and
   a terminal disposed in an interior of the housing (1) and configured to be connected to an external cable (6), wherein
   one portion of the floor face aperture portion (1b) comprises a draw-in portion having an opening to pass through the external cable (6) in a state in which the cover member (2, 3, 4) is attached,
   the side face aperture portion (1c) is provided in the side wall (15) forming a front face side of the housing (1), and **characterised in that**
the cover member (2, 3, 4) includes an L-form frame (4) detachably attached to a lower portion of the side wall (15), a cover (3) provided on a floor face side of the housing (1) so as to overlap with one portion of the L-form frame (4), and a front face panel (2) provided on an upper portion of the L-form frame (4) on the front face side of the housing (1), and a ground bus (5) is attached to the L-form frame (4) in a place on an inner side of the housing (1) in a state in which the L-form frame (4) is attached to the housing (1).

2. The switchgear according to claim 1, wherein the cover (3) has a hole (3a) or a depressed portion acting as a draw-in portion for the external cable (6).

3. The switchgear according to either of claim 1 or claim 2, wherein the cover member (2, 4, 18, 18A, 18B, 20) is fixed to the housing (1, 1A, 1B, 1C) with a bolt (7, 7a, 7b).

**Patentansprüche**

1. Schaltanlage, die Folgendes umfasst:

ein Gehäuse (1), das eine Deckplatte (12), eine Bodenplatte (13) und eine Seitenwand (15) und einen Öffnungsabschnitt (1a) aufweist, der einen Bodenseiten-Öffnungsabschnitt (1b), der in der Bodenplatte (13) bereitgestellt ist, und einen Seitenflächen-Öffnungsabschnitt (1c) umfasst, der in der Seitenwand (15) bereitgestellt ist;
ein Abdeckelement (2, 3, 4), das abnehmbar so an dem Gehäuse (1) angebracht ist, um den Öffnungsabschnitt (1a) zu bedecken; und
einen Anschluss, der in einem Inneren des Gehäuses (1) angeordnet und ausgelegt ist, um mit einem externen Kabel (6) verbunden zu sein, wobei:

ein Abschnitt des Bodenseiten-Öffnungsabschnitts (1b) einen Einzugsabschnitt mit einer Öffnung umfasst, um das externe Kabel (6) in einem Zustand durchzuführen, in dem das Abdeckelement (2, 3, 4) angebracht ist,
der Seitenflächen-Öffnungsabschnitt (1c) in der Seitenwand (15) bereitgestellt ist, die eine Frontflächenseite des Gehäuses (1) ausbildet, und **dadurch gekennzeichnet, dass**:
das Abdeckelement (2, 3, 4) einen L-förmigen Rahmen (4), der abnehmbar an einem unteren Abschnitt der Seitenwand (15) angebracht ist, eine Abdeckung (3), die auf der Bodenseiten-Seite des Gehäuses (1) so bereitgestellt ist, um mit einem Abschnitt des L-förmigen Rahmens (4) zu überlappen, und eine Frontflächenplatte (2) aufweist, die auf einem oberen Abschnitt des L-förmigen Rahmens (4) auf der Frontflächenseite des Gehäuses (1) bereitgestellt ist, und dass eine Massesammelschiene (5) an dem L-förmigen Rahmen (4) an einer Position auf einer Innenseite des Gehäuses (1) in einem Zustand angebracht ist, in dem der L-förmige Rahmen (4) an dem Gehäuse (1) angebracht ist.

2. Schaltanlage nach Anspruch 1, wobei die Abdeckung (3) ein Loch (3a) oder einen vertieften Abschnitt aufweist, der als Einzugsabschnitt für das externe Kabel (6) fungiert.

3. Schaltanlage nach einem der Ansprüche 1 oder 2, wobei das Abdeckelement (2, 4, 18, 18A, 18B, 20) mit einem Bolzen (7, 7a, 7b) an dem Gehäuse (1, 1A, 1B, 1C) fixiert ist.

**Revendications**

1. Appareille de commutation, comprenant :

un boîtier (1) ayant une plaque supérieure (12), une plaque de base (13) et une paroi latérale (15), et ayant une partie d'ouverture (1a) comprenant une partie d'ouverture de face de base (1b) prévue dans la plaque de base (13) et une partie d'ouverture de face latérale (1c) prévue dans la paroi latérale (15) ;
un élément de couvercle (2, 3, 4) fixé de manière amovible au boîtier (1) de manière à couvrir la partie d'ouverture (1a) ; et
une borne disposée dans un intérieur du boîtier (1) et configurée pour être connectée à un câble externe (6), dans lequel

une partie de la partie d'ouverture de face de base (1b) comprend une partie d'entrée ayant une ouverture pour un passage traversant de câble de ligne externe (6) dans un état dans lequel l'élément de couvercle (2, 3, 4) est fixé,

la partie d'ouverture de face latérale (1c) est prévue dans la paroi latérale (15) formant une face avant du boîtier (1), et **caractérisé en ce que**

l'élément de couvercle (2, 3, 4) comprend une armature en forme de L (4) fixé de manière amovible à une partie inférieure de la paroi latérale (15), un couvercle (3) prévu sur un côté de face de base du boîtier (1) de manière à chevaucher une partie de l'armature en forme de L (4), et un panneau de face avant (2) prévu sur une partie supérieure de l'armature en forme de L (4) sur le côté de face avant du boîtier (1), et un bus de masse (5) est fixé à l'armature en forme de L (4) en un endroit sur un côté intérieur du boîtier (1) dans un état dans lequel l'armature en forme de L (4) est fixé au boîtier (1).

2. Appareille de commutation selon la revendication 1, dans lequel le couvercle (3) a un trou (3a) ou une partie enfoncée agissant comme une partie d'entrée pour le câble externe (6).

3. Appareille de commutation selon la revendication 1 ou la revendication 2, dans lequel l'élément de couvercle (2, 4, 18, 18A, 18B, 20) est fixé au boîtier (1, 1A, 1B, 1C) à l'aide d'un boulon (7, 7a, 7b).

FIG. 1

FIG. 2

(a)

(b)

(c)

# FIG. 3

(a)

(b)

(c)

# FIG. 4

(a)

4

(b)

4a    4b    4    4b    4a

(c)

4

# FIG. 5

(a)

5a

5

5a

5b

5b

(b)

5b    5    5b    5a

FIG. 6

(a)

(b)

(c)

FIG. 7

(a)

(b)

(c)

(d)

FIG. 8

FIG. 9

FIG. 10

FIG. 11

FIG. 12

FIG. 13

FIG. 14

FIG. 15

FIG. 16

18a

18

18

18

(a)

(b)

(c)

FIG. 17

(a)

(b)

(c)

(d)

(e)

FIG. 18

18A

18b

60a

(a)

18B

18c

60a

(b)

FIG. 19

13

19

1B

18

60a

19a

FIG. 20

（a）

（b）

（c）

（d）

（e）

（f）

FIG. 21

FIG. 22

FIG. 23

(a)

(b)

(c)

FIG. 24

(a)

(b)

FIG. 25

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011167022 A
- JP S599703 U
- JP 2013258838 A
- JP 2002252906 A